(19) Europäisches Patentamt
European Patent Office
Office européen des brevets

(11) EP 2 381 273 A2

(12) EUROPEAN PATENT APPLICATION

(43) Date of publication:
26.10.2011 Bulletin 2011/43

(51) Int Cl.:
G01T 1/02 (2006.01)

(21) Application number: 11159997.3

(22) Date of filing: 28.03.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 22.04.2010 US 799287
28.04.2010 CA 2701535

(71) Applicant: Uryupin, Oleg
Mann's Mountain, NB E3N 4X1 (CA)

(72) Inventors:
• Polishchuk, Volodymyr
03142, Kiev (UA)
• Savostin, Denis
140103, Ramenskoe Moscow (RU)

(74) Representative: Baker, Karen Veronica
Baker Associates
Intellectual Property Law Offices
Irongate Lodge
5 Alderson Road
Harrogate HG2 8AS (GB)

(54) **Personal dosimeter on the base of radiation integrated circuit**

(57) This invention provides a radiation dosimeter and new method of operation which comprise two types of the metal-oxide-semiconductor field-effect transistor (MOSFET) circuits allowing to amplify the threshold voltage changes due to radiation and provide temperature compensation. The first type dosimeter is a radiation integrated circuit (RADIC) which includes two radiation field-effect transistors (RADFET) and two MOSFET, integrated into the same substrate. The second type of radiation circuit includes two RADFETs, integrated into the same substrate, and two resistors. The amplification of the threshold voltage change is achieved by using amplification principles of an MOSFET inverter. In both cases, under the ionizing irradiation, the gate of first RADFET is forward biased and the gate of second RADFET is biased off. In the reading mode the amplified differential threshold voltage change is measured. The increased radiation sensitivity allows to measure of the milli-rad doses. The temperature effect and drift is substantially eliminated. These radiation integrated circuits can be used as a personal dosimeter in the nuclear, industrial and medical fields.

Fig.5

**Description**

BACKGROUND OF THE INVENTION

Metal-oxide-semiconductor dosimeters are MOS field-effect transistors with a specially processed gate insulator in order to make it radiation soft.

There are presently conventional personnel dosimeters such as thermal luminescent devices. Such devices use a small crystal of $CaF_2$ or LiF which traps the electrons and holes produced by the ionizing radiation. When heated, light is emitted from the crystal due to the emptying of the traps and this light is related to the accumulated dose.

A MOSFET dosimeter as commonly known as a radiation field-effect transistor (RADFET) measures a shift in the threshold voltage of RADFET caused by radiation.

Radiation field-effect transistors are their numerous advantages with respect to thermal luminescent devices: low cost, small size and weight, robustness, accuracy, large measurable dose range, real-time or delayed direct reading, information retention, possibility of monolithic integration with other sensors and/or circuitry capable of performing measurement, signal conditioning and data processing.

Canadian Pat. No. 1,204,885 which issued May 20, 1986 to Ian Thomson discloses a radiation dosimeter comprising a pair of silicon insulated gate field effect transistors (IGFET) by measuring the differential threshold between two IGFET sensors exposed to the same radiation, in which one is biased into its conducting region, and the other is biased either off or to a conducting level less than first. These dual IGFET's dosimeter offer a sensitivity about 2 mV/cGy for case in which the gate bias is equal to 3 volts, or about 5 mV/cGy for the case in which the gate voltage is greater than 10 volts. The temperature sensitivity of the dual IGFET sensor has been found to be smaller than 0.1 mV/°C. Over the military temperature range -20°C to +50°C, a 70° difference, $\Delta V_T$ =7 mV or 1-3 cGy.

The problem associated with this prior art device is that it is not enough sensitive dosimeter for use by personnel workers in the medical, nuclear and industrial field. The personal dosimeter should have a sensitivity of approximately 0.010 cGy (Rad).

B.O'Connell, A.Kelleher, W.Lane, L.Adams in a paper entitled «Stacked RADFETs for Increased Radiation Sensitivity published in IEEE Tran. Nucl. Sci. Vol.43, N3, June 1996 has demonstrated the radiation sensitivity of 80 mV/cGy by stacking of 15 individual RADFETs on the same chip.

V.Polischuk and G.Sarrabayrouse in a paper entitled «MOS ionizing radiation dosimeters: from low to high dose measurement» published in the revue of Radiation Physics and Chemistry, Vol.61, No 3-6, 2001 presented a stack-connected RADFET configuration with RADFETs having a very thick gate oxide of 1,6 $\mu$m. To increase the sensitivity and the minimum measurable dose up to 14 transistors have been stacked. With this the output voltage before irradiation was 18V. A sensitivity as high as 90 mV/cGy has been obtained.

Both teams claimed about possibility to measure milli-Rad doses. However, stacked RADFETs exhibit a number of problems which limit their use in personal dosimeters. The problem is that single RADFET has a certain temperature coefficient. The metal oxide semiconductor field-effect transistor device has a temperature threshold voltage dependence that needs to be accounted for in order that only radiation induced shift in threshold voltage is measured by dosimeter. For stacked RADFETs the temperature sensitivity increases more than N times (N is number RADFETs in stacked) than single one.

The inventor has measured the temperature sensitivity of stacked RADFETs made by B.O'Connell's team by using their RADFETs dosimeters. The temperature response is 70 mV/°C for 15 MOSFETs in stacked for small constant current mode of 10 $\mu$A. If the reading temperature is controlled as +/-1 °C, the minimum measured dose is about 5 cGy or 5 Rad.

G.Sarrabayrouse, D.Buchdahl, V.Polischuk, S.Siskos in a paper entitled «Stacked MOS ionizing radiation dosimeters: potentials and limitations» published in Radiation Physics and Chemistry, Vol.71, 2003, pp.737-739. proposed to reduce temperature sensitivity of stacked RADFETs by measuring stacked RADFETs at the Minimum Temperature Coefficient (MTC) point. Indeed this paper presents only the computer simulations. The temperature sensitivity at MTC point and threshold voltage drifts were not measured as well.

Another problem of stacked RADFET is its high output voltage which in some cases is about 18 volts. So it is difficult to amplify the small changes of threshold voltages, caused by radiation, by using operational amplifiers.

In the present invention in order to increase radiation sensitivity we used the amplification principles of MOSFETs inverters described in the book of R. H. Crawford, "MOS FET in Circuit Design", New York: McGraw-Hill. 1967.

It is therefore an object of the present invention to provide a radiation integrated circuit as a personal dosimeter having a milli-Rad sensitivity and temperature compensation by applying amplification principles of inverters.

SUMMARY OF THE INVENTION

This invention relates to a solid-state dosimeter measuring very low doses of ionizing radiation from 0.01 cGy to 2 cGy and more particularly to radiation integrated circuit (RADIC) based on RADFET and MOSFET elements or to circuit based on RADFETs and resistors. During irradiation of any of RADICs the first RADET (left) in the reference circuit is biased off and the second RADFET (right) in the inverter circuit is biased. Thus the threshold voltage of the second RADFET varies with the dosage to a considerably greater degree than that of the first RADFET. During measurement the threshold voltage change of the second RADFET (right) is amplified by its inverter circuit. The output voltage change will be equal to the amplified differential threshold voltage change:

$$\Delta U_{out} = A_u \, \Delta U_T$$

Thus the present invention solves the problems of low radiation sensitivity of conventional dual IGFETs and stacked connected RADFETs dosimeters.

Second object of this invention is that this radiation integrated circuit has minimum temperature effect and is relatively insensitive to temperature changes. This is achieved by measuring the differential threshold voltage from two RADFETs. To assure that temperature affect both RADFETs equally the circuits with both RADFET and both MOSFETs or with two RADFETs were fabricated in the same silicon substrate, i.e. in the same chip. The gate oxide thickness of each RADFET is preferably 1 $\mu$m.

BRIEF INTRODUCTION TO THE DRAWINGS

A better understanding of the invention will be obtained by reference to the detailed description of the invention below, and to the following drawings, in which:

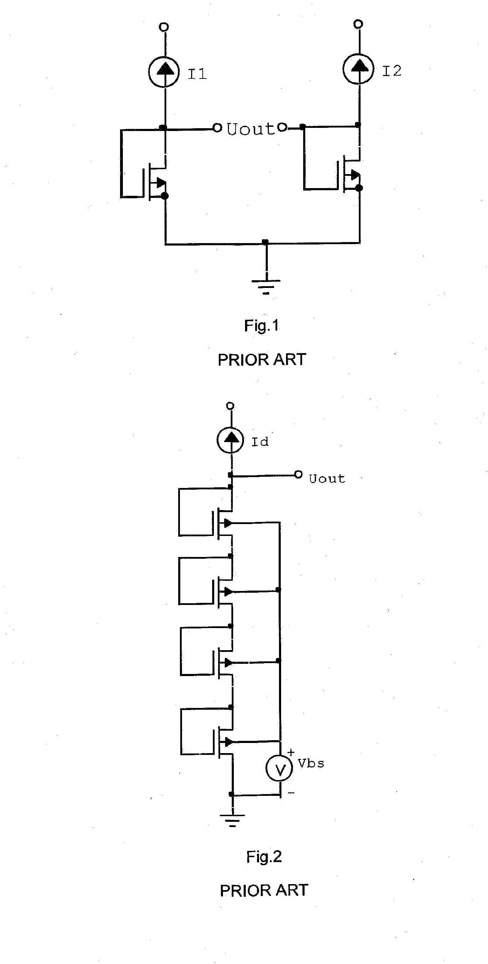

Figure 1 is a dual IGFET's dosimeter ready for measurement of its differential threshold voltage.

Figure 2 is a reading configuration of stacked connected RADFETs dosimeter.

Figure 3 is an inverter with a MOSFET as a load.

Figure 4 is an inverter with a resistor as a load.

Figure 5 is a schematic of the radiation integrated circuit for the basic embodiment of the invention in its configuration prepared to accept irradiation.

Figure 6 is a schematic of the radiation integrated circuit dosimeter for the basic embodiment of the invention in the reading mode.

Figure 7 is a schematic of the radiation circuit for the second embodiment of the invention prepared to accept irradiation.

Figure 8 is a schematic of the radiation circuit dosimeter for the second embodiment of the invention in the reading mode.

Figure 9 shows the response of the radiation circuit as a function of the radiation dose of gamma-ray for the second embodiment of the invention.

DETAILED DESCRIPTION OF THE INVENTION

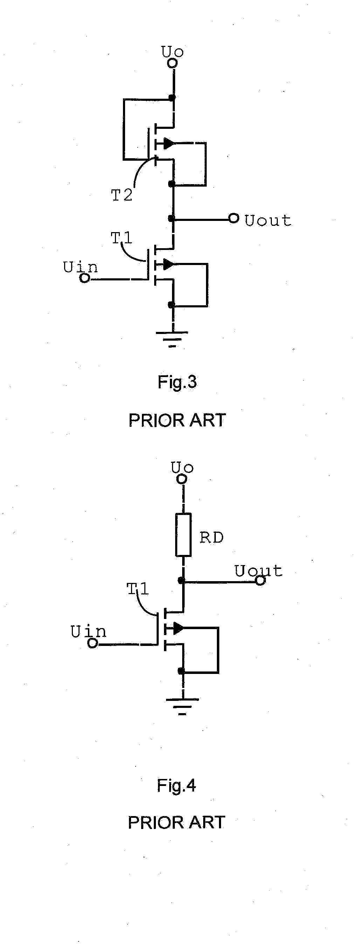

Figure 3 shows an inverter made of two MOSFETs, where T1 is a managing MOSFETS transistor and T2 is a loading MOSFET transistor. Amplification coefficient of this inverter according to a prior art from the book of R. H. Crawford referenced in background of the invention is

$$\frac{dU_{out}}{dU_{in}} = A_u = -\sqrt{\frac{\beta_1}{\beta_2}} = -\sqrt{\frac{(W/d_{ox}L)_1}{(W/d_{ox}L)_2}}$$

Where β is given as

$$\beta = \frac{\mu \varepsilon_0 \varepsilon_{ox} W}{d_{ox} L}$$

Figure 4 shows an inverter made of a MOSFET and a resistor, where T1 is a managing transistor and $R_D$ is a loading resistor. Amplification coefficient of this second inverter according again to a prior art from the book of R. H. Crawford is proportional to steepness or transition conductivity and to the loading resistance:

$$\frac{dU_{out}}{dU_{in}} = A_u = -g_m (R_D \| r_d)$$

Where $(R_D \| r_d)$ is an equivalent resistance of parallel connected loading resistor $R_D$ and dynamic drain resistance $r_d$.

$$(R_D \| r_d) = \frac{R_D * r_d}{R_D + r_d}$$

$$g_m = \sqrt{2|\beta|} * \sqrt{|I_D|}$$

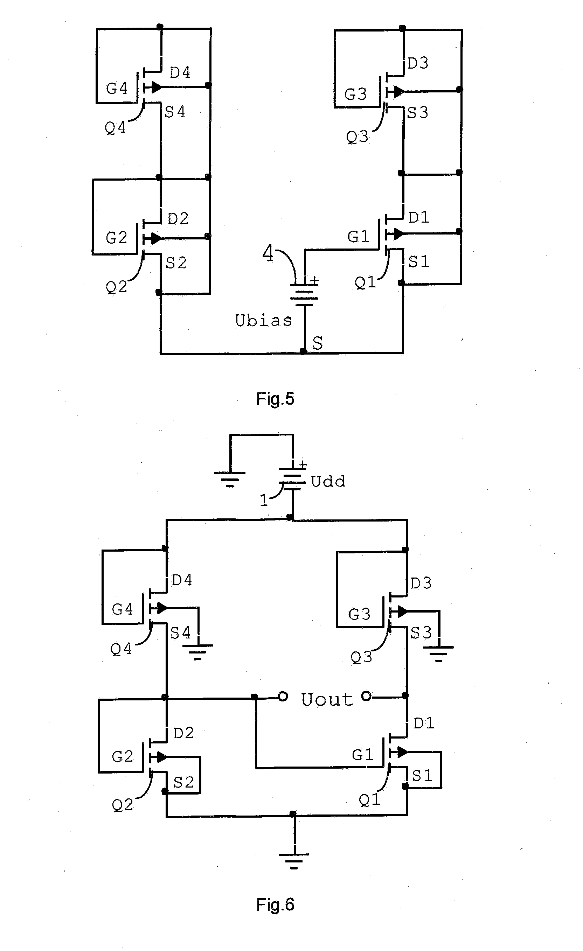

Figure 5 illustrates the basic embodiment of the present invention. The RADFET Q2 has its gate G2, drain D2 and source S2 connected together and they are connected to the common source S. The RADFET Q1 has its gate G1 biased by the battery 4 and its drain D1 and source S1 are connected to the common source S. Two MOSFETs Q3 and Q4 have their drains D3 and D4, gates G3 and G4, sources S3 and S4 connected to the common source S.

Both RADFETS Q1 and Q2 and both MOSFETs Q3 and Q4 are subjected to the same ionizing radiation. The MOSFETS have thin oxide thickness less or equal than 100 nm and RADFETs have oxide thickness more or equal than 1 μm. Because the radiation sensitivity is proportional to oxide thickness the MOSFET have very small sensitivity in comparison with RADFET. It has been found than radiation sensitivity is much greater for the biased RADFET, Q1 than non-biased RADFET Q2.

Figure 6 illustrates the basic embodiment of the present invention in the reading mode. It shows the same RADFETs Q1 and Q2 and the same MOSFETs Q3 and Q4 in a radiation integrated circuit (further RADIC1) prepared to measure the radiation dose. The sources S1 and S2 of the RADFETs are connected together and grounded. The gate G2 of RADFET Q2 is connected to its own drain D2 and this drain is connected also to the gate G1 of RADFET Q1. The gate G3 and the drain D3 of the MOSFETs Q3 are connected together. The gate G4 and the drain D4 of the MOSFETs Q4 are connected together as well. The source S3 of MOSFET Q3 is connected to the drain D1 of the RADFET Q1 and the source S4 of the MOSFET Q4 is connected to the drain D2 of the RADFET Q2. A power supply $U_{dd}$ is connected to the drains D3 and D4 of both MOSFETs. Both MOSFETs should be the same. Both RADFETs should be the same as well. Both MOSFETs and both RADFETs are fabricated in the same die. Thus both RADFETs should have the same temperature variation characteristics, the same initial threshold voltage and the same oxide charges prior to irradiation. Both MOSFETs should have also the same temperature characteristics and the same threshold voltage. The RADFET Q1 and MOSFET Q3 are the inverter which can amplify the threshold voltage change of RADFET Q1. The amplification of threshold voltage change is given by the following equation:

$$A_u = -\sqrt{\frac{(W/d_{ox}L)_{RADFET}}{(W/d_{ox}L)_{MOSFET}}}$$

In case when the RADFETs parameters are as W1=1200 $\mu$m, L1=50 $\mu$m and dox=1 $\mu$m and the MOSFET parameters are as W2=20 $\mu$m, L2= 2400 $\mu$m and dox=0.1 $\mu$m the amplification of threshold voltage change is 17.
The output voltage $U_{out}$ is measured between the drains D1 and D2 of the RADFETs. Prior to irradiation, the voltage $U_{out}$ is measured as a first amplified differential threshold. After irradiation the output voltage $U_{out}$ is measured again. The output voltage change $\Delta U_{out}$ is equal to the difference between the output voltages before and after irradiation or to the amplified differential threshold voltage $\Delta U_T$ due to the dosage received:

$$\Delta U_{out} = A_u * \Delta U_T$$

The RADFET Q2 and MOSFET Q4 is the reference circuit which has the same temperature and drift characteristics as the inverter. Thus the temperature effect of this radiation integrated circuit is eliminated.

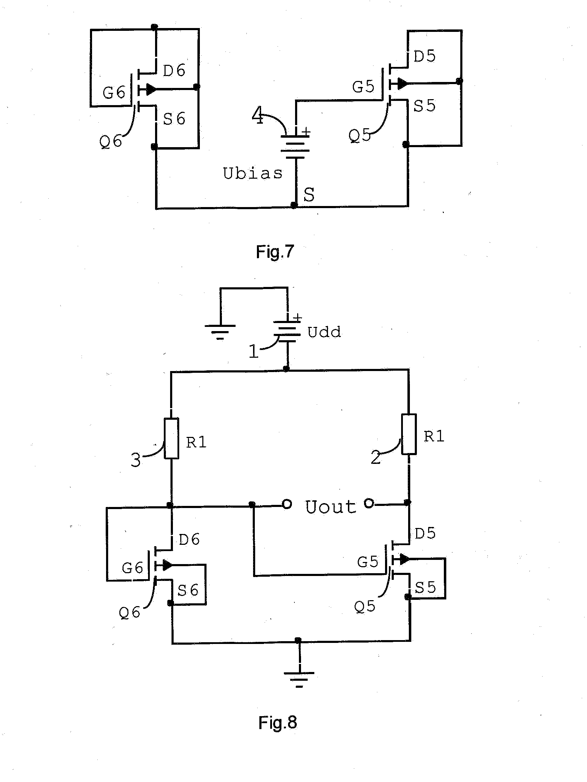

Figure 7 illustrates the second embodiment of the present invention. The RADFET Q6 has its gate G6, drain D6 and source S6 connected together and they are connected to the common source S. The RADFET Q5 have its gate G5 biased by the battery 4 and its drain D5 and source S5 connected to the common source S.
Both RADFETS Q5 and Q6 are subjected to the same ionizing radiation. RADFETs have oxide thickness equal or more than 1 $\mu$m. During irradiation RADFET Q5 is biased by the battery 4 and RADFET Q6 is biased off. Thus RADFET Q5 has considerably higher radiation sensitivity than RADFET Q6.
Figure 8 illustrates the second embodiment of the present invention in the reading mode. Figure 8 illustrates the same RADFETs Q5 and Q6 and the same resistors 2 and 3 in the radiation integrated circuit 2 (further RADIC 2) prepared to measure the radiation dose. The sources S5 and S6 of the RADFETs are connected together and grounded. The gate G6 of RADFET Q6 is connected to its own drain D6 and this drain is connected also to the gate G5 of RADFET Q5. The resistor 2 is connected to the drain D5 of the RADFET Q5 and the resistor 3 is connected to the drain D6 of the RADFET Q6. A power supply $U_{dd}$ is connected to both resistors 2 and 3.
Both RADFETs Q5 and Q6 should be the same and are fabricated in the same die. Thus both RADFETs should have the same temperature variation characteristics, the same initial threshold voltage and the same oxide charges prior to irradiation. The RADFET Q5 and resistor 2 are the inverter which can amplify the threshold voltage change of RADFET Q5. The amplification of threshold voltage change of RADFET Q5 is given by the following equation:

$$A_u = -\sqrt{\left(\frac{\mu \varepsilon_0 \varepsilon_{ox} W}{d_{ox}L}\right)_{RADFET} * \sqrt{|I_D|} * (R_1 \| r_d)}$$

In case when the RADFETs parameters are such as W=4000 $\mu$m, L=40 $\mu$m and R1=1000 k$\Omega$ the amplification of threshold voltage change of the inverter is 15.
The RADFET Q6 and resistor 3 are the reference circuit for the inverter and it has the same temperature and drift characteristics as the inverter. Thus the temperature effect of this radiation circuit is minimized. The measured temperature sensitivity of RADIC2 is 0.5 mV/C.
The output voltage change $\Delta U_{out}$ is equal to the amplified differential threshold voltage $\Delta U_T$ due to the dosage received.
The radiation sensitivity of this radiation circuit *(S=$\Delta U_{out}$/D)* is 240 mV/cGy for the case of biased voltage during irradiation Ubias=3.3V. Taking into account the measured temperature sensitivity the minimum measured dose is about 0.01 cGy or 10 mRad when temperature is controlled as ±1°C.

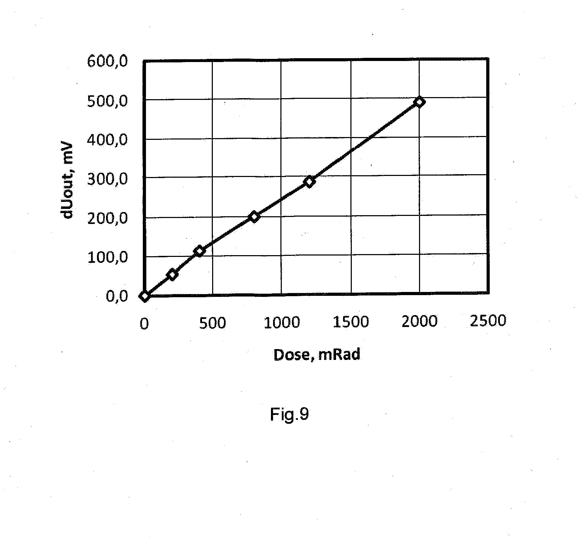

Figure 9 shows the experimental output voltage changes as a function of the irradiation dose of gamma-rays for radiation integrated circuit (RADIC 2).

Thus it may be seen than the radiation integrated circuits (RADIC 1 and RADIC 2) of the present invention provide a more sensitive and accurate dosimeter circuit than prior art dual IGFET dosimeter or stacked-connected RADFETS dosimeter.

**Claims**

1. A radiation dosimeter comprising a pair of radiation field effect transistors with thick oxide, each having a gate, a source, and a drain, and a pair of metal oxide field effect transistors, with thin oxide, each having a gate, a source, and a drain, all transistors integrated into the same substrate, means for applying a voltage to drain of each MOSFETs, means for forward biasing of the gate of second RADFET and zero biasing the gate of the first RADFET under the influence of ionizing radiation, means for measuring the amplified differential threshold voltage of radiation integrated circuit.

2. A radiation dosimeter comprising a pair of radiation field effect transistors, integrated in the same substrate, each having a source, a drain and a gate and a pair of the same resistors equal to or greater than 200 kΩ, means for applying a voltage to first and second resistances, means for forward biasing of the gate of second RADFET and zero biasing the gate of the first RADFET under the influence of ionizing radiation, means for measuring the amplified differential threshold voltage of radiation integrated circuit.

3. A dosimeter as defined in claim 1, means for connecting the drain with the gate of first MOSFET and the drain with the gate of the second MOSFET, means for connecting the drain of the first MOSFET and the drain of the second MOSFET with voltage supply, means for connecting the gate with drain of the first RADFET, means for connecting the drain of the first RADFET with the gate of the second RADFET, means for connecting the source of the first MOSFET with drain of the first RADFET and the source of second MOSFET with drain of second RADFET, means for reading amplified threshold difference between the drains of RADFETs to obtain an initial amplified differential threshold or voltage corresponding to accumulated radiation dose before irradiation.

4. A dosimeter as defined in claim 2, means for connecting the voltage supply with first and second resistances, means for connecting the gate and drain of the first RADFET, means for connecting the drain of the first RADFET with the gate of the second RADFET, means for connecting the first resistance with drain of the first RADFET and the second resistance with drain of the second RADFET, means for reading amplified threshold voltage difference between the drains of the first and second RADFETs to obtain an accumulated radiation dose after irradiation.

5. A dosimeter as defined in claim 1 or 3 in which the RADFETs and MOSFETs have aluminium gates or polysilicon gates.

6. A dosimeter as defined in claim 2 or 4 in which the RADFETs has aluminium gates or polysilicon gates.

7. A dosimeter as defined in claim 1 or 2 in which RADFETs have oxide thickness equal to or greater than about 0,5 μm.

8. A method of measuring ionizing radiation dosage comprising:

    (1) measurement of an initial amplified differential threshold voltage of radiation integrated circuit 1 (RADIC 1) comprising two RADFETs and two MOSFETs or radiation integrated circuit 2 (RADIC 2) comprising two RADFETs and two resistances;
    (2) forward biasing the gate of second RADFET and zero biasing of the first RADFET exposed to ionizing radiation for radiation integrated circuit 1 and 2;
    (3) measurement of the amplified differential threshold voltage after irradiation between two RADFETs where the amplification is given for radiation integrated circuits:

a) RADIC1: $\quad A_u = -\sqrt{\dfrac{(W/d_{ox}L)_{RADFET}}{(W/d_{ox}L)_{MOSFET}}}$

b) RADIC2: $\quad A_u = -\sqrt{\left(\dfrac{\mu\varepsilon_o\varepsilon_{ox}W}{d_{ox}L}\right)_{RADFET}} * \sqrt{|I_D|} * (R_1\|r_d)$

(4) subtracting of the amplified differential threshold voltage measured after irradiation from that measured before irradiation.

$$\Delta U_{out} = A_u * \Delta U_T$$

9. The dosimeters as defined in claim 1 or 2 in which the radiation integrated circuits 1 and 2 have the amplification of differential threshold voltage change equal 17 and 15 and these values can be between 2 and 100 as function of MOSFET, RADFET and resistor parameters.

I1

I2

Uout

Fig.1

PRIOR ART

Id

Uout

Vbs

Fig.2

PRIOR ART

8

Uo

T2

Uin

T1

Uout

Fig.3

PRIOR ART

Uo

RD

T1

Uin

Uout

Fig.4

PRIOR ART

Fig.5

Fig.6

Fig.7

Fig.8

Fig.9

## REFERENCES CITED IN THE DESCRIPTION

**Patent documents cited in the description**

- CA 1204885, Ian Thomson

**Non-patent literature cited in the description**

- **B.O'CONNELL ; A.KELLEHER ; W.LANE ; L.AD-AMS.** Stacked RADFETs for Increased Radiation Sensitivity published. *IEEE Tran. Nucl. Sci.,* June 1996, vol. 43 (3
- **V.POLISCHUK ; G.SARRABAYROUSE.** MOS ionizing radiation dosimeters: from low to high dose measurement. *Radiation Physics and Chemistry,* 2001, vol. 61 (3-6
- **G.SARRABAYROUSE ; D.BUCHDAHL ; V.POLISCHUK ; S.SISKOS.** Stacked MOS ionizing radiation dosimeters: potentials and limitations. *Radiation Physics and Chemistry,* 2003, vol. 71, 737-739
- **R. H. CRAWFORD.** MOS FET in Circuit Design. Mc-Graw-Hill, 1967